Europäisches Patentamt

European Patent Office

Office européen des brevets

(11) Publication number: 0 175 944
A2

## EUROPEAN PATENT APPLICATION

(21) Application number: 85110741.7

(22) Date of filing: 27.08.85

(51) Int. Cl.4: B63C 11/22

(30) Priority: 14.09.84 IT 1525384 U
19.10.84 IT 1527184 U

(43) Date of publication of application:
02.04.86 Bulletin 86/14

(84) Designated Contracting States:
AT BE CH DE FR GB LI LU NL SE

(71) Applicant: SCUBAPRO ITALY S.p.A.
Via Tangoni, 16
I-16030 Casarza Ligure (GE)(IT)

(72) Inventor: Semeia, Roberto
Via S. Martino 1
I-16035 Rapallo (GE)(IT)

(74) Representative: Porsia, Attilio et al
c/o Succ. Ing. Fischetti & Weber-Dr. Porsia Via
Caffaro 3/2
I-16124 Genova(IT)

(54) Breathable gas delivery valve for underwater breathing apparatuses.

(57) The hand-operable rotating actuating element (405) of the delivery valve (4) is provided with means, cooperating with corresponding retaining means (406) formed on the valve body (401) (or on a part associated therewith) for locking it in its closed or open position. To unlock said actuating element (405) in order to bring it from it closed to its open position, or vice-versa. same must be pushed in one direction at right angles to its plane or rotation against the action of spring means (16). The delivery valve element is in the form of a ball valve (8). To the said delivery valve (4) a gas-reserve valve (5) may be associated, which reserve valve (5) is contained in a separate body (25), which may be assembled, for instance by screwing, to a union (21) formed in the delivery valve body (401), or formed in an element (2) associated to the delivery valve body (401).

This invention relates to the underwater breathing apparatuses, and more particularly to the delivery valves for the compressed-gas bottles for the said apparatuses.

The main requirements for the delivery valves to be used in underwater breathing apparatuses may be summarizzed as follows:

a) It must be possible to operate the valve from its closed to its open position, and vice versa, by means of a quick and easy operation.

b) It must be excluded the possibility of unintentional or fortuitous operations of the said valve.

c) The wear of the packings of said valve must be reduced as much as possible.

It is therefore the main object of the invention to provide a delivery valve for compressed gas-bottles for underwater breathing apparatuses, which meets all the above requirements.

According to one feature of the invention, the above object is attained by using as delivery valve a rotary ball valve the outer operating device of which, connected to the valve stem, may be retained in its open and/or closed position by retainer means requesting a special preliminar unlocking operation in order to allow the rotation of the ball valve.

Advantageously, the said outer ball-valve operating device is in the form of a lever-like element, and the said retainer means are in the form of projections which may be overcome by the said lever like element by a passing-over movement against the action of a spring return force.

According to a further characteristic feature, the present invention is concerned with a rotary ball delivery valve of the above kind, to which a so called breathable gas reserve valve is associated.

It is known that the self contained underwater breathing apparatuses are provided, in addition to the delivery valve, also with a reserve valve which is so calibrated as to automatically shut down the breathable gas flow from the delivery valve to the user whenever the pressure in the bottles drops under a pre-determined value, in order to provide a warning to the user, which is compelled to manually reset the gas flow, that the amount of breathable gas is in a reserve condition.

At the present time the said reserve valves are housed inside of a chamber formed in the body of the delivery valve itself.

This feature entrains many drawbacks, among which it may be mentioned the difficulties involved with the assembling, dissassembling and calibrating of the said reserve valves.

It is therefore a further object of the present inven tion to eliminate the above mentioned drawbacks of the prior art reserve valves.

According to the invention, this object is attained by forming the said reserve valve as a member which is separate from the delivery valve, which is contained in a separate valve body, and which may be easily and quickly assembled and disassembled from the delivery valve body.

Further objects and features of the invention will be evident from the following description of one preferred embodiment of same, made with reference to the accompanying drawings, in which:

Figure 1 is a schematic exploded view of a delivery and reserve valve assembly according to the invention, showing also a portion of the gas bottle to which it is connected.

Figure 2 is a side view, in enlarged scale, of one preferred embodiment of the gas delivery valve according to the invention.

Figure 3 is a longitudinal section through the valve of Figure 2, and

Figure 4 is a longitudinal section through the reserve valve according to the invention, and through the parts associated therewith according to another embodiment of the invention.

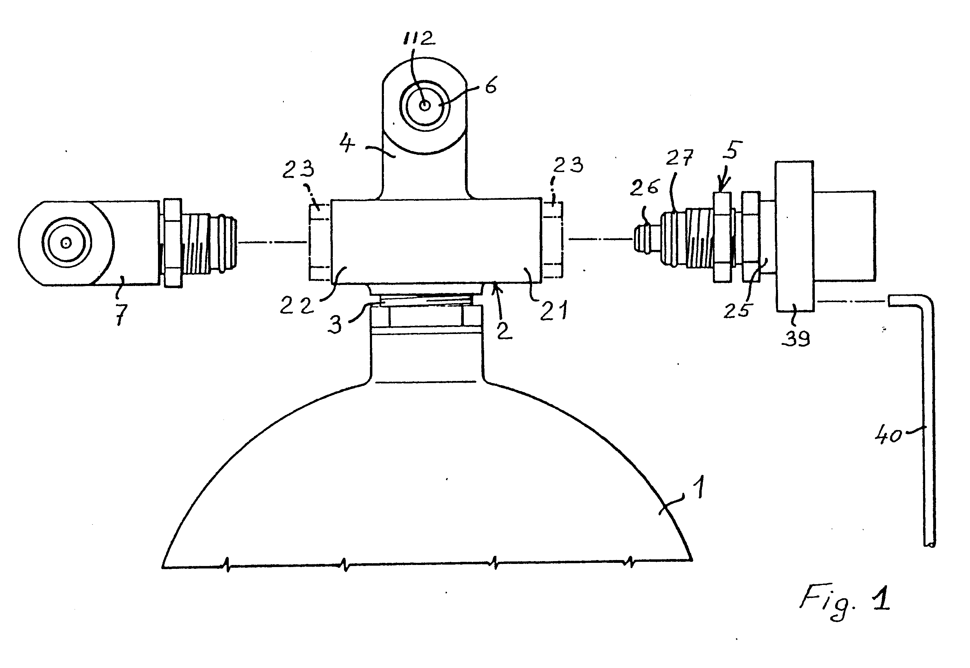

With reference to the drawings, and with particular reference to Figure 1 thereto, numeral 1 denotes a breathable compressed gas bottle. To the neck of bottle 1, the connecting piece 2 is attached, through the screw fitting 3. To the said connecting piece 2 the delivery valve 4, provided with the main delivery head 6, the reserve valve 5 and the auxiliary delivery head 7 are connected.

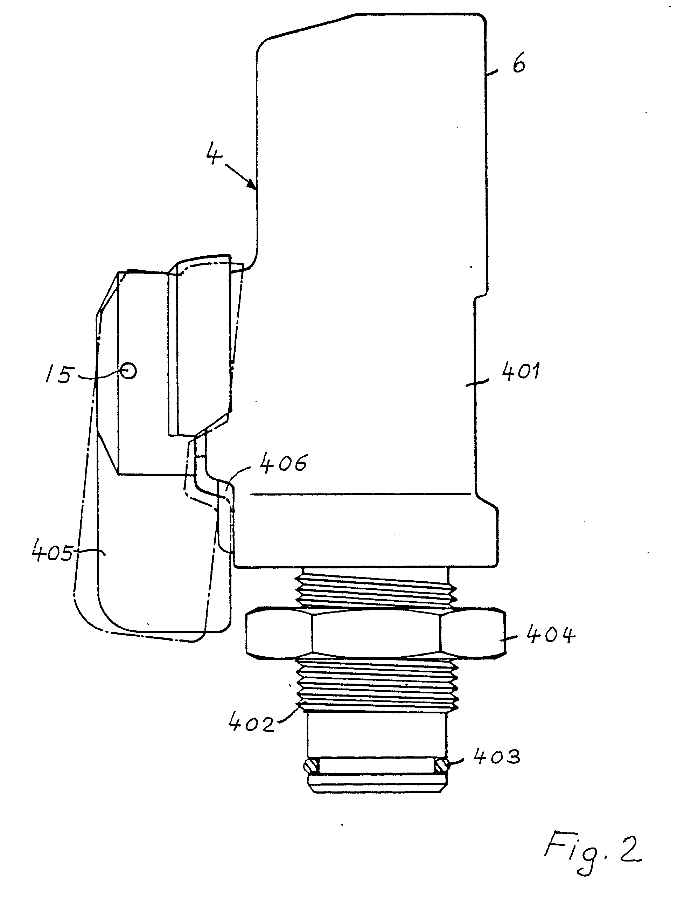

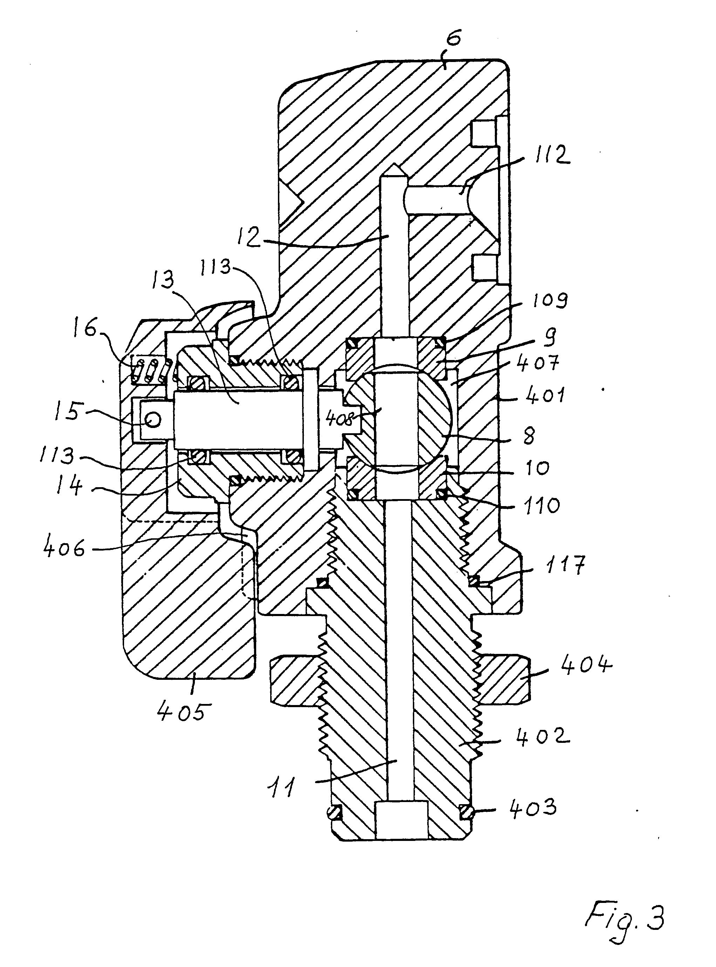

With reference to Figures 2 and 3 of the drawings, the delivery valve 4 according to the invention will be now described. The said valve 4 has, as shown, a substantially cylindrical body 401 which is provided, in the embodiment shown, at one end with a tubular screw fitting 402 for connection to a suitable connecting piece (not shown), or for direct connection to the neck of the gas bottle 1. The fitting 402 is provided, in usual way, with a sealing ring 403 and with a stop nut 404. At its other end, the valve 4 is provided with a delivery head 6, for connection to the mouthpiece (not shown) of the user.

With numeral 405 the operating lever of the valve 4 is denoted, cooperating with the retaining rib 406, formed on the valve body 401. As best shown in Figure 3, the valve body 401 is provided at its inside with a cylindrical chamber 407 housing the ball valve 8. The said ball valve 8 is endwise rotatably supported by the seat blocks 9, 10, which are each formed by a cylindrical, axially bored member, provided on one end with a concave profile matching the spherical profile of the ball valve 8, and seated at their other end against the end wall of the chamber 407, and against a supporting shoulder formed at one end of the fitting 402, with the interposition of suitable sealing rings 109, 110. The ball valve 8 is provided with a diametral boring 408, which in one position of the valve is axially aligned with the axial passages of the blocks 9, 10. The axial passages of the blocks 9, 10 are in turn axially aligned with the gas inlet duct 11, formed in the fitting 402, and with the gas outlet duct 12 formed in the head 6, and communicating through duct 112 with the delivery head for connection to the mouthpiece.

The ball valve 8 is further provided with a suitable notch into which one end of the valve stem 13 is engaged in a non-rotatable manner. The valve stem 13 is rotatably guided through a suitable cylindrical box 14, screwed to the valve body 401, with the interposition of annular sealing rings 113. To the outer end of the stem 13, the operating lever 405 of the ball valve is secured by means of the pin 15 in a pivotable but not rotatable manner. A spring 16 is seated by one end in a suitable dead hole formed in in rear end of the lever 405, and abuts with its other end against the outer rim of box 14.

A ridge like element 406 is formed on the outer mantle of the valve body 401, in the path of travel of the fore end or actuating end of the lever 405, and the said ridge 106 projects upwardly so as to interfere with the rotational movement of the lever 405, by a distance such as to be passed over by the said lever end, whenever same is pivoted upwardly around pin 15 against the action of the spring 16.

The operation of the described valve will be evident. By lifting the fore end of the lever 405 around the pivot 15, against the action of the spring 16, by such an amount as to bring said lever end at a level above the ridge 406, the lever 405 may be rotated so as to operate the ball valve 8 into either a closure position, or an opening position (position shown in Figure 3). Since the operation of the valve 8 is requesting a combined lifting and rotating movement, same cannot be operated unintentionally. Thanks to the use of a ball valve, the opening and closing movement of the valve requires only a very limited stroke, and moreover there is a very limited wear of the valve surfaces.

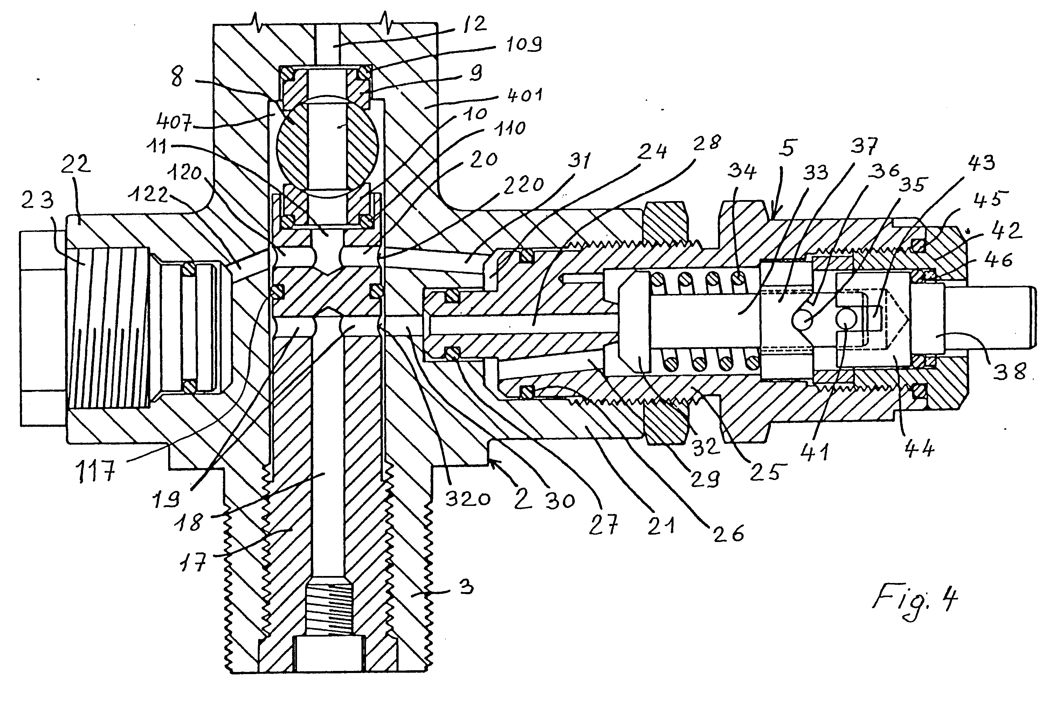

In Figure 4 a modified embodiment of the invention is shown, according to which to the above described delivery valve, the reserve valve 5 is associated.

According to the embodiment shown, the body 401 of the delivery valve 4 is made integral with a connecting piece 2, formed by a T shaped tubular element, provided with two side branch type unions 21 and 22, and by a screw fitting 3, for attachment to the gas bottle 1.

Inside of the connecting piece 2 the cylindrical member 17 is screwed, extending from the free end of the fitting 3 up to the seat block 10 of the delivery valve. The said member 17 is provided with a firsts axial dead hole 17, extending up to the region of the longitudinal axis of the branch unions 21, 22, and communicating with an annular gap formed between the said member 17 and the surrounding cylindrical chamber 407 of the connecting piece through two borings 19. At its other end, the said cylindrical member 17 is provided with a second dead hole 11, communicating at one end with the through passage 408 of valve 8, and at its other end with the chamber 407, through the holes 120 and 20. Between the holes 19 and 120, 20 an annular sealing ring 117 is seated on the cylindrical member 17. Moreover, the member 17 is provided, at the level of the outlets of the holes 19, and 120, 20, with two annular grooves 320 and 220.

To the union 21 the reserve valve 5 is branched. The said reserve valve comprises a hollow body 25, provided at one end with a plug-like extension which is screwed into the union 21, and further provided with an endwise extension of minor diameter which fits into a corresponding cavity of the union 21, with the interposition of a sealing ring 27. A further sealing ring 26 is provided on the plug-like extension of the reserve valve body 25. The said body 25 is provided with a first through hole 28 communicating with the hole 30 formed in the connecting piece 2, which in turn is in communication with the annular groove 320; and with a second through hole 29, in communication with a chamber confined between the sealing rings 26 and 27. The said chamber 24 communicates in turn through the duct 31 with the annular groove 220 in chamber 407. Both the holes 28 and 29 communicates at their other ends with the inner cylindrical chamber of the reserve valve 5. Inside of the said chamber the valve member 32 is housed, which member 32 closes, whenever the gas pressure in the gas bottle 1 drops under a prefixed value, the communication to duct 28 (as shown in Figure 4). The valve member 32 is carried by the stem 33, which is axially slidably and rotatably supported by the nut 37. Between the nut 37 and the valve member 32 a cylindrical spring 34 is inserted, which constantly urges the valve member 32 in its closure position against the seat formed around the end of the duct 28.

The nut 37 is provided with a V shaped cam-like notch 36 on its side opposite to the side against which one end of the spring 34 bears, which notch 36 cooperates with a transversally extending pin 35 carried by the stem 33, for the purposes which will be described latter. The chamber of the reserve valve is closed at its outer end by a cap-like element 42, provided with a sealing ring 45, and further provided axially with a through bore through which the rotatable actuating element 38 is led to the exterior, with the interposition of a suitable sealing ring 46. The actuating member 38 is provided, at its side internal to the valve body 25 with a cup-like extension 44, into which the free end of the stem 33 extends. The said cup like estension 44 is provided with two longitudinal diametrically opposed slots 43, into engamement with two transversal pins 41 carried by the stem 33.

The operation of the described reserve valve will be evident.

Until the gas pressure in the gas bottle 1 is above a certain value (60 -:-90 bar) the valve 5 is maintained open by the gas pressure against the action of spring 34, thus establishing a communication through conduits 30 and 31 with the delivery valve 8. As soon as the gas pressure drops below said value, the valve member is urged against its seat by the spring 34, thus automatically closing said communication. The user is therefore compelled to manually re-open the valve 5, and is thereby provided with a warning that the bottle 1 is becoming empty. In order to re-set the gas-flow conditions, he must rotate the actuating member 38. The rotation of member 33 entrains in rotation the valve stem 33, through the cup like extension 44, the slots 43 and the pins 41. During to the rotation of the valve stem 33, the pins 35 slide along the cam surfaces 36, thus axially rearwardly pulling the stem 33 against the action of spring 34, until said pins 35 come to bear on the rim of the nut 37, thus re-establishing the communication between bottle 1 and valve 8. In order to facilitate the operation of re-setting of valve 5, to the actuating member a lever-like element 39 (Figure 1) may be associated, which may be connected to a suitable operating tie-rod 40.

As shown, the union 22 (and/or the union 21) may be closed by a suitable screw plug 23. To the said union 22 an additional delivery head 7 may be screw-connected.

Thanks to the fact that the reserve valve 5 is self contained in the body 25, thus forming a modular unit, the following main advantages are achieved:

a) It is possible for the user to easily dismount the reserve valve from the delivery valve, and to substitute same quickly, should the operation of the said valve be defective.

b) It is possible to furnish the delivery valve without the reserve valve, since same may be assembled if and when requested.

## Claims

1) A breathable gas delivery valve (4) for underwater breathing apparatuses, of the type comprising a valve body, (401) a rotary ball valve (8) housed inside of said valve body (401), said rotary ball valve (8) comprising a valve stem (13) connected at one end to the said ball valve (8), and connected at its other end to an outer actuating element (405) movable from a valve opening to a valve closing position, and vice versa, characterized by the fact that the said outer actuating element (405) may be retained in a releasable manner in one of its operating closing or opening positions by retainer means (406).

2) A breathable gas delivery valve (4) according to claim 1, characterized by the fact that the said actuating element (405) is provided with spring means (16) urging it into engagement with the said retainer means (406), and in which the said retainer means are in the form of projections which may be overcome by the said actuating element (405) by acting on the said actuating element (405) in a direction against the action of the spring return force of the said spring means (16).

3) A breathable gas delivery valve according to claim 1, characterized by the fact that the said actuating element (405) is provided whith spring means (16) urging it into engagement with the said retainer means (406), and in which the said retainer means (406) are in the form of notches cooperating with corresponding detent means on the said actuating element (406), which may be disengaged from the said notches by acting on the said actuating element (405) in a direction against the action of the spring return force of the said spring means (16).

4) A breathable gas delivery valve according to claim 1, characterized by the fact that the said actuating element (405) is in the form of a lever-like element, pivotably connected at an intermediate position to the said valve stem (13) by a suitable pivot (15), and which is urged constantly in one direction around said pivot (15) by a spring (16) acting on one of its ends, whilst it is formed at its other end with detent means cooperating with the said retainer means (406).

5) A breathable gas delivery valve (4) according to claim 1, having further associated therewith a reserve valve (5) characterized by the fact that the said reserve valve (5) is housed in a separate body (25) which may be easily and quickly assembled and disassembled to a union member (21) associated to the said delivery valve.

6) A breathable gas delivery valve (4) according to claim 5, characterized by the fact that the said reserve valve comprises a cylindrical valve body (25) containing a slidable valve element (32) which may be shifted by spring means (34) against a valve seat (28) thus interrupting the flow of gas from a gas source (1) to the said gas delivery valve (4), manually operable means being provided (38, 44, 43, 41, 35, 36, 37) for re-setting the said gas flow by returning the said valve element (32) away from the said valve seat (28), against the action of the said spring (34).

Fig. 1

Fig. 2

Fig. 3

Fig. 4

0 175 944